# EUROPEAN PATENT SPECIFICATION

(11) **EP 3 656 817 B1**
(45) Date of publication and mention of the grant of the patent: **04.08.2021**
(21) Application number: 18382854.0
(22) Date of filing: 26.11.2018
(51) Int. Cl.: C08L 67/06

(54) **SHEET MOULDING COMPOUND (SMC), PROCESS FOR ITS MANUFACTURING AND HYBRID MATERIAL CONTAINING MOLDED SMC**
SHEET MOULDING COMPOUND (SMC), VERFAHREN ZU DESSEN HERSTELLUNG UND HYBRIDMATERIAL MIT GEFORMTEM SMC
COMPOSÉ DE MOULAGE DE FEUILLE (SMC), SON PROCÉDÉ DE FABRICATION ET MATÉRIAU HYBRIDE CONTENANT UN SMC MOULÉ

(43) Date of publication of application: 27.05.2020
(73) Proprietor: Fundación Gaiker, 48170 Zamudio Vizcaya (ES)
(72) Inventor: Allue Salvador, Alexandra, 48170 Zamudio, Bizkaia (ES); Gondra Zubieta, Koldo, 48170 Zamudio, Bizkaia (ES); López Tapia, Carlos, 48170 Zamudio, Bizkaia (ES)
(74) Representative: Balder IP Law, S.L.

(56) References cited:
- US-A1- 2003 065 057
- US-A1- 2013 137 823
- DATABASE WPI Week 201379 Thomson Scientific, London, GB; AN 2013-J15363 XP002790620, -& CN 102 942 761 A (UNIV CHANGZHOU) 27 February 2013 (2013-02-27)

## Description

### FIELD OF THE INVENTION

The present invention relates to a resin formulation for manufacturing a sheet molding compound (SMC), to the obtained SMC using said resin formulation and a fiber reinforcement, to parts obtained by molding said SMC, and also to hybrid materials (composites) comprising at least a molded SMC component and a rubber component. The invention also relates to the processes for manufacturing the mentioned resin formulation, the SMC, the parts obtained by molding SMC, and the hybrid materials. The improved resin formulation of the invention incorporates a phenolic resin, which promotes adhesion between the at least two components of the hybrid material, as compared to conventional resin compositions. The hybrid materials can be used for the manufacturing of a diversity of elements with diverse applications, e.g. in the automotive sector.

### BACKGROUND OF THE INVENTION

The technological, economic factors and environmental factors are the aspects that have a more direct impact on the development of the new automotive and transportation components in general. The developments in these industrial sectors are mainly directed to improve the production process, the reduction in the weight of the components, and improve their performance.
In the automotive sector, there are currently several anti-vibration elements that are manufactured with rubber injected on metal or on PA reinforced with fiberglass, such as: exhaust pipe supports or anti-vibration elements for vehicle suspension (shock absorber supports and elastic joints).
Currently, the bonding of the different materials of these supports or elements is made using solvent-based adhesives which application is cost and time consuming. In this sense, prior to the application of the adhesive, the rigid elements to be bonded have to be prepared, its preparation consisting of the cleaning of their surfaces with organic solvents (oils and fats) and their cleaning thereafter by chemical or mechanical methods (elimination of the rest of contaminants). After cleaning the surfaces, it is convenient to apply the adhesive without any delay, since the cleaned and prepared surfaces have the possibility to contaminate again. Then the application of the adhesive consists in the uniformly deposition on a substrate (reinforcement) to be bonded of one or two layers of adhesive. During the subsequent vulcanization step this adhesive will bond the substrate (reinforcement) with the rubber (elastomer). The bond between the substrate and the adhesive is made by absorption and that of the latter and the elastomer, by crosslinking.
Currently, all the adhesives used in the manufacturing of suspension parts are solvent based, which allow high productivity due to their rapid evaporation and provide an excellent bond, however, due to their chemical nature, they emit volatile organic compounds and must be handled with caution.

In addition to the above, the trend in the automotive sector is aimed at reducing weight in motor vehicles, which means replacing the metal parts in the different components with lighter materials. That is why the presence of anti-vibration elements of polyamide is increasing since replacing the metal by PA makes it possible to lighten the motor vehicles and thus save on fuel consumption. The reason for the use of polyamide is mainly because it withstands high temperatures; therefore PA is adequate to resist the process of rubber over-injection, which takes place at 160 °C.
Specifically, polyamide 66 has a melting point of approximately 230 ° C and its working temperature may range between 120 ° C and 180 ° C; this implies that suppliers of Polyamide 66 do not recommend the use of PA 66 at continuous working temperature exceeding 120 °C.
On the other hand, the properties of the PA fall drastically with increasing temperature. A composite of Polyamide 66 with 35wt% short fiberglass, has a maximum breaking strength of 104 MPa at a working temperature of 120 °C, and a resistance of more than 250 MPa at 20 ° C, that is, the reduction of the resistance is approximately of 58% with an increase in the working temperature of 100 °C.

In the specific case of the exhaust pipe supports the tendency is to use hybrid pieces of Polyamide-EPDM rubber for replacing the conventional metal-rubber parts, with the aim of reducing the weight of the vehicle. EPDM rubber is used in applications where the parts have to work at high temperatures, and anti-vibration supports for exhaust pipes or radiators, have a thermal requirement between 140 and 180 °C. The EPDM rubber has a maximum thermal resistance in continuous working condition of 130 °C and in discontinuous working condition of 150 °C

In view of the above stated there is the need in the state of the art to provide new hybrid materials with satisfactory performance in applications in industrial sectors, like for example in the automotive sector, where good mechanical properties and high thermal resistance under working conditions are required. Moreover there is also the need to provide hybrid materials which can be obtained in a more simple and cost-effective manner, avoiding the use of solvent based adhesives which as above mentioned are associated with many disadvantages, like cost and time consuming pretreatment steps for the preparation of the surfaces for the subsequent application of adhesives and the emission of harmful for health and environment VOCs, etc.

### SUMMARY OF THE INVENTION

At least part of the disadvantages of the state of the art above mentioned have been overcome by the present invention as it will be explained in the following.

The present inventors have surprisingly found an improved resin formulation. This resin formulation can be used as impregnating paste for the preparation of a new SMC in a conventional manufacturing process. The new SMC shows improved properties when it is subsequently used in the preparation of the present hybrid materials which comprise at least two components: a first component and a second component direct and chemically bonded one to another without any adhesive, wherein the hybrid material is obtained according to a process wherein the first component is obtained by molding the new SMC of the invention and the second component is obtained by over-injecting rubber on the first component. The improved resin formulation, which incorporates a phenolic resin, promotes adhesion between the at least two components of the hybrid material, as compared to conventional resin compositions. In this respect the inventors have observed that the strong molecular bonding of the at least two components of the hybrid material, is due to the formation of different chemical bonds between certain ingredients, as it will be explained in detail further below.

The hybrid material of the invention shows thus improved adherence between the at least two components, very good mechanical properties and thermal resistance, which render it very suitable for use in elements or articles like exhaust pipe supports or anti-vibration elements for vehicle suspension (shock absorber supports and elastic joints), and the like.

Accordingly in a first aspect the invention relates to a resin formulation comprising:
a) 100 parts by weight of a resin mix comprising
   (i) unsaturated polyester resin and
   (ii) anticontraction additive,
   which resin mix comprises 60 -100 parts by weight of an unsaturated polyester resin and 40 - 0 of an anticontraction additive;
b) 1.1-1.8 parts by weight of a catalyst per 100 parts of resin mix,
c) 3 - 5 parts by weight of a thickening agent per 100 parts of resin mix;
d) 40 - 90 parts by weight of a first filler with average particle size of greater than 5 to 7 µm per 100 parts of resin mix;
e) 15 - 35 parts by weight of a second filler with average particle size of 2 to 5 µm per 100 parts of resin mix;
f) 5.5 - 22.5 parts by weight of a phenolic resin per 100 parts of resin mix;
g) 1.5 - 2.5 parts by weight of a wetting agent per 100 parts of resin mix.

In another aspect the invention relates to a SMC, comprising: a fiber reinforcement and the resin formulation of the invention as matrix brought together with the fiber reinforcement, and located between supporting films (also referred to as foils or sheets).
In another aspect the invention relates to a molded SMC part or part obtained by molding SMC. Molding is preferably carried out by compression molding.
In another aspect the invention relates to a hybrid material (also herein referred to as composite) comprising at least two components bonded by chemical bonds to each other: a first component consisting of the molded SMC part of the invention and a second component consisting of a conventional EPDM rubber over-injected on the first component.
In a further aspect the invention relates to a process for preparing the SMC of the invention, comprising:
- continuously supplying resin formulation of the invention;
- feeding a first supporting film and continuously applying resin formulation to one surface of the film;
- continuously supplying fiber reinforcement, preferably chopped fibers, and more preferably chopped glass fibers to the said first supporting film with the applied resin formulation on the side comprising the resin formulation;
- feeding a second supporting film and continuously applying resin formulation to one surface of the film;
- continuously laminating the second supporting film comprising the resin formulation with the first supporting film so that the resin formulation of each film are contacted, and the fiber reinforcement is located between the two supporting films and impregnated with the resin formulation;
- compacting the intermediate laminated product obtained in previous step to render the SMC of the invention.

In still a further aspect the invention relates to a process for obtaining a molded SMC part or for molding SMC. The SMC of the invention is in general molded in a compression process, using a conventional metal mold used for the production of, among other parts, large and relatively flat molded parts. Molding is typically carried out in a conventional manner, wherein two or more, in general, several SMC sheets are placed on top of each other, as layers, in a mold and are subjected to compression: pressure and temperature

In another aspect the invention relates to a process for obtaining the hybrid material wherein the first component is obtained by the process for obtaining a molded SMC part as above described and the second component is obtained by over-injecting a EPDM rubber paste on the first component.

In another aspect the invention relates to parts or elements made from or comprising the hybrid material of the invention. These parts or elements can be used in diverse industrial sectors, e.g. in the automotive sector, like exhaust pipe supports or anti-vibration elements for vehicle suspension (shock absorber supports and elastic joints), and the like.

### DESCRIPTION OF THE INVENTION

A resin formulation suitable for manufacturing a sheet molding compound (SMC) is described which comprises:
a) 100 parts by weight of a resin mix comprising
   (i) unsaturated polyester resin and
   (ii) anticontraction additive,
   which resin mix comprises 60 -100 parts by weight of an unsaturated polyester resin and 40 - 0 of an anticontraction additive;
b) 1.1-1.8 parts by weight of a catalyst per 100 parts of resin mix,
c) 3 - 5 parts by weight of a thickening agent per 100 parts of resin mix;
d) 40 - 90 parts by weight of a first filler with average particle size of greater than 5 to 7 µm per 100 parts of resin mix;
e) 15 - 35 parts by weight of a second filler with average particle size of 2 to 5 µm per 100 parts of resin mix;
f) 5.5 - 22.5 parts by weight of a phenolic resin per 100 parts of resin mix;
g) 1.5 - 2.5 parts by weight of a wetting agent per 100 parts of resin mix.

In the present application the term "parts" always refers to parts by weight unless otherwise expressly indicated.

### Unsaturated polyester resin.

The unsaturated polyester resin is a polymer which is the condensation product of multifunctional carboxylic acids and/or their corresponding anhydrides with multifunctional alcohols.
Saturated multifunctional carboxylic acids or anhydrides that may be present include o-phthalic acid, m-phthalic acid, p-phthalic acid, hexahydrophthalic acid, tetrahydrophthalic acid, cyclohexane dicarboxylic acid, adipic acid, succinic acid, malonic acid, nadic acid, trimellitic acid, pyromellitic acid, the related derivatives of such compounds and their corresponding anhydrides, preferably o-phthalic acid, m-phthalic acid, p-phthalic acid and their corresponding anhydrides, and more preferably o-phtalic acid or its anhydride. In this application, the term "saturated" refers to compounds that are relatively unreactive towards traditional methods of free radical polymerization. The preferred concentration of the total saturated multifunctional carboxylic acid and anhydride equals 0 to 15 mole percent of the total carboxylic acid and anhydride content.
Suitable unsaturated multifunctional acids or anhydrides that may be present include maleic anhydride, maleic acid, fumaric acid, itaconic acid and related derivatives, preferably maleic acid or its anhydride. These are preferably present in an amount of 15 to 100 mole percent of the total carboxylic acid and anhydride content.
The acids, anhydrides and related derivatives described above are reacted with any combination of multifunctional alcohols to render the unsaturated polyester resin. Examples of suitable multifunctional alcohols present in the unsaturated polyester resin are ethylene glycol, diethylene glycol, triethylene glycol, propylene glycol, dipropylene glycol, tripropylene glycol, neopentyl glycol (NPG), butane diol, butyl ethyl propane diol, trimethyl pentane diol, trimethylol propane, hexane diol, cyclohexane dimethanol, glycerol, pentaerythritol and related derivatives, preferably ethylene glycol, diethylene glycol, triethylene glycol, propylene glycol, and more preferably isopropylene glycol. The amount of total multifunctional alcohol present in the unsaturated polyester resin is from 70 to 130 mole percent relative to the total carboxylic acid and anhydride content. Preferred unsaturated polyester resin contain as saturated multifunctional carboxylic acid or anhydride, o-phthalic acid or its anhydride in a concentration of 0 to 15 mole percent of the total carboxylic acid and anhydride content; maleic acid or its anhydride as unsaturated multifunctional acid or anhydride, present in an amount of 15 to 100 mole percent of the total carboxylic acid and anhydride content; the multifunctional alcohol being isopropylenglycol.
Also other preferred unsaturated polyester resin contain as saturated multifunctional carboxylic acid or anhydride, o-phthalic acid or its anhydride in a concentration of 0 to 10 mole percent of the total carboxylic acid and anhydride content; maleic acid or its anhydride as unsaturated multifunctional acid or anhydride present in an amount of 10 to 100 mole percent of the total carboxylic acid and anhydride content; the multifunctional alcohol being isopropylenglycol.
Also preferred are unsaturated polyester resin containing as saturated multifunctional carboxylic acid or anhydride o-phthalic acid or its anhydride in a concentration of 0 to 5 mole percent of the total carboxylic acid and anhydride content; maleic acid or its anhydride as unsaturated multifunctional acid or anhydride present in an amount of 5 to 100 mole percent of the total carboxylic acid and anhydride content; the multifunctional alcohol being isopropylenglycol.

The unsaturated polyester resin suitable for use in the present invention can be obtained by conventional well known synthesis methods and/or are commercially available from different supplying companies. Suitable unsaturated polyester resins for use in the present invention may be supplied in a reactive diluent, such as styrene and related analogues of styrene. Some analogues of styrene include vinyl toluene, alpha methyl styrene, divinyl benzene and t-butyl styrene. The concentration of reactive diluent can be up to about 50 wt%, and is typically between 35 and 45 wt%. In some embodiments, the reactive diluent concentration is less than about 35 wt%, for example 30 to 34 wt%.

Most suitably are unsaturated polyester resins which have, medium viscosity (e.g. 450 - 1400 mPa.s measured at 25°C and Brookfield LVF sp. 2/12 rpm according to ASTM D 2196-10) and high reactivity (65 - 210 sg catalysed resin with 1% of TBPB ( tert-butyl peroxybenzoate) at 130°C, measured according to ISO 584-1982). Illustrative examples of commercially available unsaturated polyester resins for use in the present resin formulation are PALAPREG® P17-02 (DSM), NORSODYNE® m 28045 (Poloynt) or POLYTE® 661-000 (REICHHOLD).
The unsaturated polyester resin in the resin mix is present in the range of from 60 to 100, preferably present in the range of from 70 to 100, more preferably from 80 to 100, more preferably from 90 to 100, for example 85, 90 or 95 parts by weight, and most preferably 100 parts by weight.

### Anti-contraction additive

Anti-contraction additives are well known for skilled persons in the art. In principle any contraction additive or mixture thereof can be used in the resin formulation without limitations. These are typically modified saturated polyesters dissolved in styrene. Illustrative examples are Palapreg H852-03, Palapeg H 2273-01, Palapreg H 2681-01 and Palapreg H 1080-01 (Alyancys). Anti-contraction additives can be optionally used in the resin formulation. The anti-contraction additive may be present in an amount from 0 to 40 parts by weight, preferably from 0 to 30, more preferably 0 to 20, or preferably from 0 to 10, for example 5 parts by weight. Most preferably the resin mix does not comprise any anti-contraction additive.

### Catalyst

The unsaturated polyester resin of the formulation may be cured by a number of free-radical initiators, such as organic peroxide and azo-type initiators. Peroxide initiators include diacylperoxides, hydroperoxides, ketone peroxides, peroxyesters, peroxyketals, dialkyl peroxides, alkyl peresters, percarbonates and peroxydicarbonates. Azo-type initiators include azobisisobutyronitrile (AIBN) and related compounds.
Suitable catalysts are for example, tert-butyl peroxybenzoate, tert-butyl peroxyoctoate, tert-butyl peroxy-2-ethylhexanoate, or mixtures thereof. These catalysts are commercially available under the names PEROXAN PO (Pergan), PEROXAN PB (Pergan) or Trigonox® 21 S (Akzo Nobel).

The catalyst of the formulation is for crosslinking the resin formulation of the SMC when this SMC of the invention is molded to produce parts as described further below.
Catalysts as those above mentioned are preferred since they allow the SMC of the invention to be preserved under normal storage conditions, avoiding the need to refrigerate the SMC for conservation. These catalysts are also highly reactive at the molding temperature of the SMC for the manufacturing of parts, as below disclosed, reducing the curing temperature and/or cycle times.
These catalysts are preferably used in the range of from 1.1 to 1.8, for example from 1.2 to 1.7, or 1.3 to 1.6 like 1.4 or 1.5 parts by weight per 100 parts of the resin mix.

### Thickening agent:

Thickening agents are conventional and commercially available agents that are responsible for increasing the viscosity of the SMC. The resin formulation changes, from a liquid state at the time of its manufacture, to a semi-solid state in its period of optimum conditions. This change in viscosity is achieved by the addition of a thickening agent in the resin formulation. The required period of maturation is usually between 2 and 4 days, depending on each specific formulation. Even once matured, the SMC continues to thicken at lower speed, depending on the storage temperature. This is why there is an optimal period of use for the SMC, between 1 and 6 months, depending mainly on the specific formulation and storage temperature, recommended between 5°C and 25°C. Higher storage temperatures can significantly reduce the usability time of the SMC.
The thickening agents that can be used in the present invention are in form of dispersions of alkaline earth metal oxides and hydroxides such as MgO, CaO or Mg(OH)₂ in polyester resins in amounts of 25wt% to 35wt% (percentage by weight in respect of the total weight of the dispersion). These are commercially available for example, the LUVATOL® thickening agents, such as LUVATOL MK 35 (Lehmann & Voss & Co.).
These thickening agents are preferably used in the range of from 3 to 5, for example from 3.5 or 4, or 3.7 parts by weight per 100 parts of resin mix.

### Fillers

The resin formulation may contain all kinds of fillers. Said fillers can be any conventional fillers for SMC products supplied in powder form. For example, calcium carbonate, clay, carbon particles, silica, aluminium trihydrate, quartz and/or metal particles can be used as fillers. Preferably, the resin formulation contains calcium carbonate.
At least two different fillers, herein referred to as filler 1 and filler 2 are used, which may be of the same or different chemical composition, and differ in their average particle size. Filler 1 has an average particle size of greater than 5 to 7 µm and filler 2 has an average particle size of 2 to 5 µm.
In some embodiments the same type of filler is used, that is, filler 1 and 2 present the same chemical composition, for example calcium carbonate and differ in their average particle size which is for filler 1 between greater than 5 to 7 µm and for filler 2 between 2 and 5 µm.
Fillers are also commercially available for example calcium carbonate BPL2 or calcium carbonate (Millicarb).
Filler 1 is preferably used in the range of from 44 to 150, for example from 44 or 80, or 50 to 70 parts by weight per 100 parts of resin mix.
Filler 2 is preferably used in the range of from 19 to 55, for example from 19 or 35, or 20 to 30 parts by weight per 100 parts of resin mix.

### Phenolic resin

Phenolic resins are also widely known as phenol-formaldehyde resins, or PF resins, and typically comprise as monomers formaldehyde and at least one hydroxyl aromatic monomer, such as phenol or substituted phenols, for example cresol, resorcinol, and the like. Phenolic resins are divided in novolacs and resoles, and any of them and their mixtures can be used. Phenolic resins can be prepared according to methods well known in the art and/or can be commercially obtained.
Phenolic resins suitable for use in the present invention which are commercially available comprise a phenolic resin and a curing agent for cross-linking.
The phenolic resin for use in the present invention comprises at least one phenolic resin, selected from novolacs, resols and mixtures thereof, and at least a curing agent. Any curing agent known in the art, for the cross-linking of the phenolic resin can be present. Suitable curing agents are amine containing compounds, such as hexamethylenetetramine and the like, which are present in an effective amount for carrying out the cross-linking reaction, of for example between 0.2 and 10 wt% or between 0.5 and 8 wt%, or between 1 and 7 wt%, for example in 2 wt%, 3 wt%, 4 wt%, 5 wt% or 6 wt%.

Phenolic resins are supplied for example in the form of a powder. Illustrative examples of commercially available phenolic resin compositions are F335 from Sumitomo Bakelite Europe (novolac-hexamine) and Prefere 8B0800T0 from Dynea (hexamine 8%).
The phenolic resin compositions above disclosed are preferably used in the range of 5.5 to 18, more preferably from 8 to 18, even more preferably from 9 to 17, and even more preferably from 10 to 14, for example 11, 12, 13, parts by weight per 100 parts of resin mix.

### Wetting agent

Wetting agents are used in the resin formulation to improve the surface impregnation of the fibers by the resin formulation. These are well known for skilled persons in the art. In principle any wetting agent or mixture of wetting agents can be used without limitations. Illustrative wetting agents are copolymers with acidic groups. Wetting agents are commercially available, for example, BYK-W 996 (Byk Chemie). A wetting agent may be used in an amount of 1.5 to 2.5, for example from 1.7 to 2.2, for example 1.8 or 2.0 parts by weight of a total per 100 parts of resin mix.

### Additives

The resin formulation may comprise one or more additives well known for skilled persons in the art described in the following.
For example one or more air release additives may be used. Illustrative examples are solutions of polyacrylates and polymers, without silicone. These are commercially available such as BYK-A 560 (Byk Chemie). Air release additives facilitate the evacuation of the air, and can be optionally used in the resin formulation in an amount of 0 to 1, or from 0.2 to 0.8, for example 0.5 parts by weight per 100 parts of resin mix.

For example one or more internal release agents may be used. Illustrative examples are stearic acid or its salts of zinc or magnesium. These are commercially available such as powder zinc stearate (Resiquim S.A). Internal release agents prevent the SMC from adhering to the mold, facilitating the demoulding of the molded SMC part, and can be optionally used in the resin formulation in an amount of 0 to 6, or from 1 to 5, or 3,5 - 4.5, for example 4, parts by weight per 100 parts of resin mix.

Further well known optional additives can also be included in the resin formulation such as pigments, adhesion promoters, inhibitors, UV absorbers, volatiles suppressants and light stabilizers, and the like. The additives and their functions are well known in the industry. When present these are typically present in amounts of 0 to 3 parts by weight per 100 parts by weight per 100 parts of resin mix.
Pigments that may be used may be organic or inorganic, such as titanium dioxide, carbon black, iron oxides, phthalocyanine blue and quinacridone red. These pigments are often dispersed in a vehicle resin. As adhesion promoters for example silanes may be used. Suppressants reduce emissions and enhance cure time; they include waxes, polyethers, polysiloxanes and various block copolymers.

In particular embodiments the resin formulation of the invention comprises a wetting agent and as the only additive, an air release additive, wherein the wetting agent is present in an amount of 1.5 to 2.5 parts and preferably 2 parts, and wherein the air release additive is preferably present in an amount of 0.2 to 0.8 parts, more preferably 0.5 parts by weight per 100 parts of the resin mix.

The skilled person understands that all the above disclosed ingredients, their amounts in ranges, subranges, and examples, the average particle sizes of the fillers 1 and 2, etc., can be combined in any manner, and that the resulting combinations are all intended to be included in the scope of the present invention.

Thus in some examples, the resin formulation comprises:
a) 100 parts by weight of a resin mix comprising unsaturated polyester resin and anticontraction additive, which resin mix comprises 80 -100 parts by weight of an unsaturated polyester resin and 20-0 parts by weight of an anticontraction additive;
b) 1.1-1.8 parts by weight of a catalyst per 100 parts of resin mix,
c) 3 - 5 parts by weight of a thickening agent per 100 parts of resin mix;
d) 44 - 80 parts by weight of a first filler with average particle size of greater than 5 to 7 µm per 100 parts of resin mix;
e) 19 - 35 parts by weight of a second filler with average particle size of 2 to 5 µm per 100 parts of resin mix;
f) 5,5 - 17 parts by weight of a phenolic resin per 100 parts of resin mix;
g) 1.5 - 2.5 parts by weight of a wetting agent per 100 parts of resin mix.
h) 0 - 1 parts by weight of an air release additive per 100 parts of resin mix;

In still other preferred embodiments the resin formulation comprises:
a) 100 parts by weight of a resin mix comprising unsaturated polyester resin and anticontraction additive, which resin mix comprises 80 -100 parts by weight of an unsaturated polyester resin and 20-0 parts by weight of an anticontraction additive;
b) 1.1-1.8 parts by weight of a catalyst per 100 parts of resin mix,
c) 3 - 5 parts by weight of a thickening agent per 100 parts of resin mix;
d) 50 - 70 parts by weight of a first filler with average particle size of greater than 5 to 7 µm per 100 parts of resin mix;
e) 20 - 30 parts by weight of a second filler with average particle size of 2 to 5 µm per 100 parts of resin mix;
f) 5,5 - 18 parts by weight of a phenolic resin per 100 parts of resin mix;
g) 1.5 - 2.5 parts by weight of a wetting agent per 100 parts of resin mix.

In still other preferred embodiments the resin formulation comprises:
a) 100 parts by weight of a resin mix comprising unsaturated polyester resin and anticontraction additive, which resin mix comprises 80 -100 parts by weight of an unsaturated polyester resin and 20-0 parts by weight of an anticontraction additive;
b) 1.1-1.8 parts by weight of a catalyst per 100 parts of resin mix,
c) 3 - 5 parts by weight of a thickening agent per 100 parts of resin mix;
d) 50 - 70 parts by weight of a first filler with average particle size of greater than 5 to 7 µm per 100 parts of resin mix;
e) 20 - 30 parts by weight of a second filler with average particle size of 2 to 5 µm per 100 parts of resin mix;
f) 10 - 14 parts by weight of a phenolic resin per 100 parts of resin mix;
g) 1.5 - 2.5 parts by weight of a wetting agent per 100 parts of resin mix.

In still other preferred embodiments the resin formulation comprises:
a) 100 parts by weight of a resin mix comprising unsaturated polyester resin and anticontraction additive, which resin mix comprises 100 parts by weight of an unsaturated polyester resin and 0 parts by weight of an anticontraction additive;
b) 1.1-1.8 parts by weight of a catalyst per 100 parts of resin mix,
c) 3 - 5 parts by weight of a thickening agent per 100 parts of resin mix;
d) 59 parts by weight of a first filler with average particle size of greater than 5 to 7 µm per 100 parts of resin mix;
e) 26 parts by weight of a second filler with average particle size of 2 to 5 µm per 100 parts of resin mix;
f) 11 parts by weight of a phenolic resin per 100 parts of resin mix.
g) 1.5 - 2.5 parts by weight of a wetting agent per 100 parts of resin mix.

### Fiber reinforcement

There are no particular restrictions on the fiber reinforcement that can be used in the present invention. Suitable fiber reinforcements are preferably chopped and include for example chopped carbon fibers, glass fibers, aramid fibers, high-strength polyethylene fibers, boron fibers, steel fibers, or mixtures thereof. In some preferred embodiments chopped glass fibers and/or carbon fibers are used, and more preferably chopped glass fibers, as they offer excellent balance between elasticity and strength, and yield sheet molding compounds (SMCs) with excellent mechanical properties.
The chopped fiber reinforcement preferably consists of chopped glass fibers having an average length in the range of from 10 to 100 mm, in particular from 20 to 80 mm, for example 25 mm, or 50 mm. Usually glass fibers are being produced and commercially available in the form of (assembled) rovings of about 1200 to 4800 tex in total, in particular from 2000 to 4000 tex, for example 2500 or 3000 or 3500 tex, wherein the tex number is a measure for the weight per unit length (g/km) of the fibrous material. Any glass fiber type can be used, for example type E. In a particular embodiment roving P204 (OCV™ Reinforcement) of 2400 tex is used.

In a further aspect the invention relates to a sheet molding compound (SMC), which is a reinforced laminar product, comprising (i) fiber reinforcement and (ii) the resin formulation as matrix brought together between supporting films. Both the fiber reinforcement and the resin formulation are as above described.

Depending on the fiber reinforcement included in the SMC, the percentage of it by weight in respect of the total weight of the SMC, excluding the supporting films, is within a range of 20wt% to 50wt%; in particular of 25wt% to 45wt%, more particularly of 30wt% to 40wt%, for example 35wt%.

In some embodiments of the SMC the fiber reinforcement consists of chopped fibers with an average length in the range of from 10 to 100 mm, preferably chopped glass fibers and/or carbon fibers, and more preferably glass fibers, as above disclosed, which are substantially 2D-randomly distributed between two layers of the resin formulation, although they are rather oriented in a slightly parallel direction to the carrier film. As used herein, substantially 2D-randomly distributed means that the chopped fibers are more or less evenly, in random orientations, distributed in a plane which can be considered to be about parallel to the planes of the first and second removable supporting films (or the upper and lower planes of the SMC after removal of those films). In practice this can be easily achieved by distributing the chopped fibers directly from a chopping unit onto a first layer of resin formulation supported on the first supporting film and applying on top thereof a second layer of resin formulation supported by the second supporting film, thereby making a sandwich which may be even better homogenized by passing the intermediate laminar product through a series of rollers so that the fibrous material is thoroughly impregnated and is homogeneous distributed.

The invention also relates to a process for manufacturing the SMC as above described comprising fiber reinforcement and the resin formulation as matrix. The process for manufacturing the SMC of the invention may be carried out in a conventional manner and in a conventional and available SMC machine, such as a SMC machine (SCHMIDT & HEINZMANN Spezialmaschinen 7520 Bruchsal). The process for manufacturing the SMC of the invention comprises the following steps:
- continuously supplying resin formulation of the invention;
- feeding a first supporting film and continuously applying resin formulation to one surface of the film;
- continuously supplying fiber reinforcement preferably chopped glass fibers to the said first supporting film with the applied resin formulation on the side comprising the resin formulation;
- feeding a second supporting film and continuously applying resin formulation to one surface of the film;
- continuously laminating the second supporting film comprising the resin formulation with the first supporting film so that the resin formulation of each film are contacted, and the fiber reinforcement is located between the two films and impregnated with the resin formulation;
- compacting the intermediate laminated product obtained in previous step,

For the process for manufacturing the SMC of the invention first the resin formulation is prepared in a manner known to the person skilled in the art, e.g., by contacting the different ingredients above disclosed in the selected amounts and homogeneously mixing. The skilled person understands that all the above disclosed ingredients, their amount ranges and subranges, average particle size of the fillers 1 and 2, etc., can be combined in any manner in the process for manufacturing the SMC, and that the resulting combinations are intended to be included in the scope of the present invention.

It is important to note that the viscosity of the resin formulation for use in the manufacturing of the SMC is preferably within certain range, preferably between 10 and 70 Pa.s, more preferably between 20 and 40 Pa.s, for example 30 Pa.s, or 35 Pa.s. Unless otherwise stated viscosities in the present invention are measured at 23 °C according to UNE-EN ISO 2555 with a Brookfield DV-III U viscometer (or viscosimeter), using the spindle 91 at 10rpm.

During the process for manufacturing the SMC the temperature of the resin formulation is preferably maintained at 35 °C or lower, more preferably between 20 and 35 °C, for example at 25°C, or 30 °C. Also the viscosity of the resin formulation is preferably maintained about 40 Pa.s.

The resin formulation is prepared in a suitable container which is present in the SMC machine. When preparing the resin composition, the thickening agent is preferably added in the last place, after the rest of ingredients in the resin formulation have been added. The SMC machine is feed with a fiber reinforcement provided e.g. as a roving, and typically includes a chopping unit with cutting means and vibrator means to provide chopped fibers which are distributed directly from the chopping unit onto a first layer of resin formulation supported on the first supporting film. The amount of chopped fibers distributed onto the first layer can be controlled through the speed of the supporting film and the chopper speed.
The intermediate laminated product obtained in the process, is compacted for example, by conveying it between compacting rollers.
Typically, supporting films comprise thermoplastic polymers for example polyethylene or polyamide. The SMC of the invention has thus a sandwich structure where the fiber reinforcement has been impregnated by the resin formulation on both sides and is covered on both sides by the supporting films.
Once the SMC has been terminated in the SMC machine, the SMC is typically stored for its later use. For example de SMC can be wounded onto spools, or can be cut into sheets, stack up and stored in suitable containers, and the like.
The SMC of the invention are in general 1 mm to 3 mm, for example 1.5 to 2.5 mm thick.

The SMC obtained directly after the manufacturing process above disclosed is then allowed to mature. That is, the SMC thickens after its manufacturing over time, typically during 24 to 96 hours, depending on the resin formulation and becomes then processable and slightly sticky so that articles can be obtained from the matured SMC by molding, e.g. by compression molding. Even after this period, the SMC of the invention further matures although at slower rate, for which reason the manufactured SMC has an optimal use period of typically between 1 and 6 months. This period however varies depending on the exact resin formulation, and the storage temperature which is usually between 5 and 25 °C.

In another aspect the invention relates to a process for obtaining a molded SMC part or for molding the SMC of the invention. The SMC is in general molded in a compression process, using a conventional metal mold. In some embodiments metal molds are used for the production of large and relatively flat molded parts. Molding is typically carried out in a conventional manner, wherein two or more, in general several SMC sheets are placed on top of each other, as layers, in a mold and subjected to compression, wherein compression refers to pressure and temperature during a period of time (called cycle). In some particular embodiments the process comprises the following steps:
1) Cutting a SMC sheet to obtain a piece of cut SMC;
2) Placing one or more pieces of cut SMC in a mold of a press;
3) Closing the mold and increasing the temperature and pressure in the mold by the press during a period of time, so that the shape of the cut SMC is adapted to fill in the cavities in the mold;
5) Press opening and demolding;

In the third step after the mold is closed, the pressure and temperature are increased by the press. The SMC is fluidized, and is capable to move inside the mold, reaching and filling all the cavities of the mold. The temperature, pressure and time period can be easily determined by the skilled person depending from each other, and from the particular SMC in each embodiment. However, in general, the applied temperature is between 80 and 160°C, in particular between 120 and 150°C, for example 130 °C or 140 °C; the pressure is between 5 and 90kp/cm2 (490 - 8825 kPa), in particular between 10 and 80kp/cm2 (980 - 7845 kPa), for example 20 kp/cm2, (1961 kPa) or 30 kp/cm2 (2941 kPa) and times are between 50 and 120 seconds, for example 90 seconds. During the process the resin formulation of the SMC sheets cures, rendering a dense, solid molded SMC part which is a further aspect of the invention

In particular embodiments the process above may comprise further steps such a trimming to provide the part with the desired form and dimensions. Also the obtained part can be used as the first component in the manufacturing of the hybrid material of the invention as further below disclosed.

In a further aspect, the invention also relates to a molded SMC part or a part obtained by the process for obtaining a molded SMC part above disclosed.
The molded SMC parts find diverse known applications. For example diverse articles can be prepared from molded SMC parts such as toecaps, pit covers, helmets, automotive parts, body protectors for sport activities and, in general, any part requiring good mechanical performance (strength and rigidity) and light weight.

In still a further aspect the invention relates to the manufacturing of a hybrid material, comprising a first component and a second component, wherein the first component is a molded SMC part or part obtained by the process for obtaining a molded SMC part as above described and the second component is a vulcanized EPDM rubber or a vulcanized EPDM rubber obtained by over-injecting a EPDM rubber paste on the first component.
The manufacturing method of the hybrid material comprises a multicomponent injection or over-injection process wherein a EPDM rubber paste is over-injected on a first component or molded SMC part (rigid substrate). In some embodiments the molded SMC part is disposed like an insert in a mold, and the EPDM rubber paste is then injected. The method can be carried out in a conventional manner using conventional equipment and optionally also an annexed robot.

The used EPDM rubber paste can be any conventional rubber paste composition comprising any ethylene propylene diene type M ASTM standard D-1418 rubber. The ethylene propylene diene type M ASTM standard D-1418 rubber comprises between 45% and 85% by weight of ethylene, a diene, typically present in an amount comprised between 2.5 % to 12 % by weight, and the rest, up to 100%, being propylene.
In some embodiments the ethylene propylene diene type M ASTM standard D-1418 rubber comprises between 65% and 75% by weight of ethylene, a diene, present in an amount comprised between 4.5 % to 5.5 % by weight, and the rest, up to 100%, being propylene.

The diene is selected from dicyclopentadiene (DCPD), ethylidene norbornene (ENB) vinyl norbornene (VNB), and their mixtures. The EPDM rubber paste composition also comprises a vulcanizing agent, such a sulphur compound or a peroxide, preferably a peroxide agent. The EPDM rubber paste may also comprise one or more conventionally used additives in conventional amounts. Non limiting examples of additives are reinforcing agents, processing agents, such as plasticizers, lubricants, peptizing agents, softeners, adhesion agents, dispersion adjuvants, oils and resins, antidegradants, such as antioxidants antiozonants, and retarding or accelerating agents, foaming agents, or pigments, and the like.

In preferred embodiments the EPDM rubber paste comprises a ethylene propylene diene type M ASTM standard D-1418 comprising between 65% and 75% by weight of ethylene, and a ENB content between 4.5 and 5.5 %.

In embodiments the EPDM rubber paste is suitable for obtaining parts or elements for use e.g. in the automotive sector, like exhaust pipe supports or anti-vibration elements for vehicle suspension (shock absorber supports and elastic joints), and the like.

Examples of commercially available rubbers are Nordel IP4760P (Dow Chemical), Keltan 5470Q (DSM ELastomers) y Royalene 694 (Chemtura Corporation) which can be vulcanized with a peroxide like Di(tert-butylperoxyisopropyl)benzene commercially available under the name Perkadox 1440.

In some embodiments the rubber paste composition is located in a spindle or endless screw, which draws the paste to a preheated container, and then under pressure into a mold where the molded SMC part has been disposed. The paste fulfills all cavities of the closed mold, which is heated to a temperature of between 130 to 180 °C, preferably 140 to 160 °C, like 150 °C, and submitted to pressure of between 2 to 20 MPa, preferably 2.9 to 10 MPa, such as 3 MPa, 3.5 MPa, or 5 MPa. After a curing time of typically one or more minutes, the resulting hybrid material is demolded.

In another aspect the invention relates to parts or elements made from or comprising the hybrid material of the invention. These parts or elements can be used in diverse industrial sectors, e.g. in the automotive sector, like exhaust pipe supports or anti-vibration elements for vehicle suspension (shock absorber supports and elastic joints), and the like.

The hybrid material of the invention presents the advantage that the union between the first and second component is achieved through chemical bonds between them without the need to use intermediate adhesives, which result in avoiding the VOC emissions of the adhesives and reducing the production costs due to the costs of adhesive application, being able to give rise to a more competitive hybrid material. Avoiding the use of adhesive also simplifies the manufacturing process, avoiding the pretreatment steps of the surfaces of the different materials.
The chemical bonds are formed during the manufacturing process of the hybrid material between one or more ingredients present in the first component and one or more ingredients present in the second component. The strength of the union between the first and second component has been experimentally determined as explained in the Examples.

Without wishing to be bound to any theory the inventors believe that the phenolic resin present in the resin formulation acts as an inhibitor of the curing of the polyester resin which means that, when the SMC of the invention is molded into a part, more C = C reactive double bonds, remain unreacted (which in a particular case come both from e.g. styrene and from maleic (or their analogues)), compared to the case without phenolic resin. The remaining double bonds are then susceptible for creating a chemical bond with the EPDM rubber during its vulcanization.
With respect to the EPDM rubber the phenolic resin would also slow down the vulcanization, so that the reactive double bonds of the EPDM rubber are also more susceptible for creating chemical bonds with the molded SMC part.

On the other hand, the inventors have also noted that when the percentage of added phenolic resin to the resin formulation exceeds a certain value, the phenolic polymerization reaction itself generates steam which creates pores in the molded SMC part, which result in a decrease in the mechanical properties of the SMC part and also of the hybrid material.

### EXAMPLES

### 1. Examples of resin formulations

The following resin formulations where prepared as follows, where Examples 1, 6 and 7 are for comparative purposes not according to the present invention and Examples 2-to 5 are according to the invention.

| ingredient | Example 1 comparative parts | Example 2 parts | Example 3 parts | Example 4 parts | Example 5 parts |
|---|---|---|---|---|---|
| (i) an unsaturated polyester resin PALAPREG® P17-02 | 100 | 100 | 100 | 100 | 100 |
| (b) catalyst Peroxan PO | 1.5 | 1.5 | 1.5 | 1.5 | 1.5 |
| (c) thickening agent Luvatol MK35 | 4 | 4 | 4 | 4 | 4 |
| (d) filler 1 BPL2 | 71 | 68 | 59 | 50 | 44 |
| (e) filler 2 Millicarb CL | 27 | 23 | 26 | 28 | 28 |
| (f) phenolic resin composition Prefere 8B0808T0 | | 5.5 | 11 | 17 | 22.5 |
| (g) wetting agent BYK 996 | 2 | 2 | 2 | 2 | 2 |
| (h) air release additive BYK A560 | 0.5 | 0.5 | 0.5 | 0.5 | 0.5 |
| TOTAL | 206 | 204.5 | 204 | 203 | 202.5 |

| ingredient | Example 6 comparative parts |
|---|---|
| (a) (i) an unsaturated polyester resin Norsodyne M 46071 | 100 |
| (b) catalyst Peroxan PO | 1.5 |
| (c) thickening agent Luvatol MK35 | 4 |
| (d) filler 1 BPL2 | 71 |
| (e) filler 2 Millicarb CL | 27 |
| (f) phenolic resin composition F335 | - |
| (g) wetting agent BYK 996 | 2 |
| (h) air release additive BYK A560 | 0.5 |
| TOTAL | 206 |

| ingredient | Example 7 comparative parts |
|---|---|
| (i) an unsaturated polyester resin Polylite 661-000 | 100 |
| (ii) catalyst Peroxan PO | 1.5 |
| (iii) thickening agent Luvatol MK35 | 4 |
| (iv-a) filler 1 BPL2 | 71 |
| (iv-b) filler 2 Millicarb CL | 27 |
| (v) phenolic resin composition F335 | - |
| (vi) wetting agent BYK 996 | 2 |
| (viii) air release additive BYK A560 | 0.5 |
| TOTAL | 206 |

Each formulation was prepared by mechanically mixing the ingredients in the indicated amounts with a dispersion cowless system of high revolutions, maintaining the mixture temperature below 28 °C. The used fiber reinforcement was chopped 25 mm long type E glass fibers (P204 OCV™ Reinforcement).
The SMC was prepared with 75wt% resin formulation and 25wt% of the fiber reinforcement. First a laminated product of resin and fibers between two supporting films was obtained, which was then allowed to mature for 72 hours, rendering a malleable and processable SMC susceptible of subsequently being molded.

### 2. Preparing of the test pieces for the determination of the adherence of the molded SMC with the EPDM rubber

The adherence of the molded SMC with the EPDM rubber was determined under the norm ASTM D429-14: Standard Test Methods for Rubber Property-Adhesion to Rigid Substrates. Method B-90° Stripping Test-Rubber Part Assembled to One Metal Plate, in a universal testing machine of the brand Shimadzu and model AGX 100, with a load cell of 50 KN (Depending on the force at which it breaks the test tube or other load cells are used, a load cell is a transducer that converts the force applied on it into a measurable electrical signal) and with a test speed of 50 mm / minute.

First the SMC obtained as above disclosed with the resin formulation from each of the Examples, was then molded in a press, in a metallic mold, with a containment frame of 2 mm thickness, at a temperature of 140 °C, for 90 seconds with a pressure of 10 MPa (100 Bar). From the molded SMC part (a plate) obtained, test pieces of dimensions 70 x 25 x 2 mm, were machined, in order to later be able to develop the adhesion specimens with the over-injected EPDM rubber.

The EPDM rubber paste composition used comprised ethylene propylene diene type M ASTM standard D-1418 comprising between 65% and 75% by weight of ethylene, and a ENB content between 4.5 and 5.5 % and Di(tert-butylperoxyisopropyl)benzene (Perkadox 1440).

The machined test pieces were placed in a mold designed to obtain specimens of type ASTM D429 Model B by over-injection of the rubber paste on another rigid material (which in this case is the SMC test piece).

Test specimens of hybrid material according to the invention were prepared in a hot plate press of 80 tons at a temperature of 180 °C (In mold), at a pressure of 5 MPa and with a cycle time of 1800 seconds. The final test specimen dimensions with the over-injected rubber were 130 x 25 x 7 mm according to the norm.

The specimens obtained were submitted to the peel adhesion test and the results are shown in the following Table:

| Resin formulation | Force (N) |
|---|---|
| Example 1 comparative | 286 + 31 |
| Example 2 | 350 + 19 |
| Example 3 | 430 + 32 |
| Example 4 | 375 + 29 |
| Example 5 | 324 + 39 |
| Example 6 comparative | 286 + 41 |
| Example 7 comparative | 287 + 50 |

It can be observed that the strength of adhesion has increased from about 286 MPa (Comparative Examples 1, 6 and 7) up to 430 MPa (Example 6), i.e. about 50%.

A break was observed to take place by the molded SMC part (first component), which implies that the bond is stronger that said value and that there has been a cohesive failure of the molded SMC material.

## Claims

1. A resin formulation comprising:
a) 100 parts by weight of a resin mix comprising:
(i) unsaturated polyester resin and
(ii) anticontraction additive,
which resin mix comprises 60 -100 parts by weight of an unsaturated polyester resin and 40 - 0 of an anticontraction additive;
b) 1.1-1.8 parts by weight of a catalyst per 100 parts of resin mix,
c) 3 - 5 parts by weight of a thickening agent per 100 parts of resin mix;
d) 40 - 90 parts by weight of a first filler with average particle size of greater than 5 to 7 µm per 100 parts of resin mix;
e) 15 - 35 parts by weight of a second filler with average particle size of 2 to 5 µm per 100 parts of resin mix;
f) 5.5 - 22.5 parts by weight of a phenolic resin per 100 parts of resin mix;
g) 1.5 - 2.5 parts by weight of a wetting agent per 100 parts of resin mix.

2. A resin formulation according to claim 1 comprising:
a) 100 parts by weight of a resin mix comprising unsaturated polyester resin and anticontraction additive,
which resin mix comprises 80 -100 parts by weight of an unsaturated polyester resin and 20-0 parts by weight of an anticontraction additive;
b) 1.1-1.8 parts by weight of a catalyst per 100 parts of resin mix,
c) 3 - 5 parts by weight of a thickening agent per 100 parts of resin mix;
d) 44 - 80 parts by weight of a first filler with average particle size of greater than 5 to 7 µm per 100 parts of resin mix;
e) 19 - 35 parts by weight of a second filler with average particle size of 2 to 5 µm per 100 parts of resin mix;
f) 5,5 - 17 parts by weight of a phenolic resin per 100 parts of resin mix;
g) 1.5 - 2.5 parts by weight of a wetting agent per 100 parts of resin mix.

3. A resin formulation according to claim 1 or 2 comprising:
a) 100 parts by weight of a resin mix comprising unsaturated polyester resin and anticontraction additive,
which resin mix comprises 80 -100 parts by weight of an unsaturated polyester resin and 20-0 parts by weight of an anticontraction additive;
b) 1.1-1.8 parts by weight of a catalyst per 100 parts of resin mix,
c) 3 - 5 parts by weight of a thickening agent per 100 parts of resin mix;
d) 50 - 70 parts by weight of a first filler with average particle size of greater than 5 to 7 µm per 100 parts of resin mix;
e) 20 - 30 parts by weight of a second filler with average particle size of 2 to 5 µm per 100 parts of resin mix;
f) 5,5 - 18 parts by weight of a phenolic resin per 100 parts of resin mix;
g) 1.5 - 2.5 parts by weight of a wetting agent per 100 parts of resin mix.

4. A resin formulation according to any one of claims 1 to 3 comprising:
a) 100 parts by weight of a resin mix comprising unsaturated polyester resin and anticontraction additive,
which resin mix comprises 80 -100 parts by weight of an unsaturated polyester resin and 20-0 parts by weight of an anticontraction additive;
b) 1.1-1.8 parts by weight of a catalyst per 100 parts of resin mix,
c) 3 - 5 parts by weight of a thickening agent per 100 parts of resin mix;
d) 50 - 70 parts by weight of a first filler with average particle size of greater than 5 to 7 µm per 100 parts of resin mix;
e) 20 - 30 parts by weight of a second filler with average particle size of 2 to 5 µm per 100 parts of resin mix;
f) 10 - 14 parts by weight of a phenolic resin per 100 parts of resin mix;
g) 1.5 - 2.5 parts by weight of a wetting agent per 100 parts of resin mix.

5. A resin formulation according to any one of claims 1 to 4 comprising:
a) 100 parts by weight of a resin mix comprising unsaturated polyester resin and anticontraction additive,
which resin mix comprises 100 parts by weight of an unsaturated polyester resin and 0 parts by weight of an anticontraction additive;
b) 1.1-1.8 parts by weight of a catalyst per 100 parts of resin mix,
c) 3 - 5 parts by weight of a thickening agent per 100 parts of resin mix;
d) 59 parts by weight of a first filler with average particle size of greater than 5 to 7 µm per 100 parts of resin mix;
e) 26 parts by weight of a second filler with average particle size of 2 to 5 µm per 100 parts of resin mix;
f) 11 parts by weight of a phenolic resin per 100 parts of resin mix.
g) 1.5 - 2.5 parts by weight of a wetting agent per 100 parts of resin mix.

6. A resin formulation according to any one of claims 1 to 5, wherein the phenolic resin comprises at least one phenolic resin, selected from novolacs, resols and mixtures thereof, and at least a curing agent.

7. A sheet molding compound (SMC) comprising: (i) a fiber reinforcement and (ii) a resin formulation according to any of previous claims as matrix brought together with the fiber reinforcement, and located between supporting films.

8. A molded SMC part or part obtained by molding the SMC of previous claim 7.

9. A molded SMC part or part obtained by molding the SMC according to claim 8, wherein molding is carried out by compression molding.

10. A hybrid material comprising at least two components bonded to each other by chemical bonds: a first component consisting of the molded SMC part according to claims 8 or 9, and a second component consisting of a vulcanized EPDM rubber.

11. A hybrid material according to claim 10, wherein the EPDM rubber is an ethylene propylene diene type M ASTM standard D-1418 comprising between 65% and 75% by weight of ethylene, and a ENB content between 4.5 and 5.5 %.

12. A process for preparing the sheet molding compound (SMC) of claim 7, comprising:
- continuously supplying resin formulation according to any one of claims 1 to 6;
- feeding a first supporting film and continuously applying said resin formulation to one surface of the film;
- continuously supplying fiber reinforcement, preferably chopped fibers, and more preferably chopped glass fibers to the said first supporting film with the applied resin formulation on the side comprising said resin formulation;
- feeding a second supporting film and continuously applying said resin formulation to one surface of the film;
- continuously laminating the second supporting film comprising said resin formulation with the first supporting film so that said resin formulation of each film are contacted, and the fiber reinforcement is located between the two supporting films and impregnated with said resin formulation;
- compacting the intermediate laminated product obtained in previous step to render the SMC.

13. A process for obtaining a molded SMC part or for molding SMC, which comprises placing two or more, in general several SMC sheets as defined in claim 7, on top of each other, as layers, in a mold and subjecting them to compression.

14. A process for manufacturing a hybrid material according to claim 10 or 11, wherein the first component is obtained by the process for obtaining a molded SMC according to claim 13 and the second component is obtained by over-injecting a EPDM rubber paste on the first component.

15. Parts or elements made from or comprising the hybrid material according to claim 10 or 11.

## Patentansprüche

1. Harzformulierung, enthaltend:
a) 100 Gewichtsteile einer Harzmischung, enthaltend:
(i) ungesättigtes Polyesterharz und
(ii) Antikontraktionszusatz,
wobei die Harzmischung 60-100 Gewichtsteile eines ungesättigten Polyesterharzes und 40-0 Gewichtsteile eines Antikontraktionszusatzes enthält;
b) 1,1-1,8 Gewichtsteile eines Katalysators pro 100 Teile Harzmischung,
c) 3-5 Gewichtsteile eines Verdickungsmittels pro 100 Teile Harzmischung;
d) 40-90 Gewichtsteile eines ersten Füllstoffs mit einer durchschnittlichen Teilchengröße von mehr als 5 bis 7 µm pro 100 Teile Harzmischung;
e) 15-35 Gewichtsteile eines zweiten Füllstoffs mit einer durchschnittlichen Teilchengröße von 2 bis 5 µm pro 100 Teile Harzmischung;
f) 5,5-22,5 Gewichtsteile eines Phenolharzes pro 100 Teile Harzmischung;
g) 1,5-2,5 Gewichtsteile eines Benetzungsmittels pro 100 Teile Harzmischung.

2. Harzformulierung nach Anspruch 1, enthaltend:
a) 100 Gewichtsteile einer Harzmischung, die ungesättigtes Polyesterharz und Antikontraktionszusatz enthält, wobei die Harzmischung 80-100 Gewichtsteile eines ungesättigten Polyesterharzes und 20-0 Gewichtsteile eines Antikontraktionszusatzes enthält;
b) 1,1-1,8 Gewichtsteile eines Katalysators pro 100 Teile Harzmischung,
c) 3-5 Gewichtsteile eines Verdickungsmittels pro 100 Teile Harzmischung;
d) 44-80 Gewichtsteile eines ersten Füllstoffs mit einer durchschnittlichen Teilchengröße von mehr als 5 bis 7 µm pro 100 Teile Harzmischung;
e) 19-35 Gewichtsteile eines zweiten Füllstoffs mit einer durchschnittlichen Teilchengröße von 2 bis 5 µm pro 100 Teile Harzmischung;
f) 5,5-17 Gewichtsteile eines Phenolharzes pro 100 Teile Harzmischung;
g) 1,5-2,5 Gewichtsteile eines Benetzungsmittels pro 100 Teile Harzmischung.

3. Harzformulierung nach Anspruch 1 oder 2, enthaltend:
a) 100 Gewichtsteile einer Harzmischung, die ungesättigtes Polyesterharz und Antikontraktionszusatz enthält, wobei die Harzmischung 80-100 Gewichtsteile eines ungesättigten Polyesterharzes und 20-0 Gewichtsteile eines Antikontraktionszusatzes enthält;
b) 1,1-1,8 Gewichtsteile eines Katalysators pro 100 Teile Harzmischung,
c) 3-5 Gewichtsteile eines Verdickungsmittels pro 100 Teile Harzmischung;
d) 50-70 Gewichtsteile eines ersten Füllstoffs mit einer durchschnittlichen Teilchengröße von mehr als 5 bis 7 µm pro 100 Teile Harzmischung;
e) 20-30 Gewichtsteile eines zweiten Füllstoffs mit einer durchschnittlichen Teilchengröße von 2 bis 5 µm pro 100 Teile Harzmischung;
f) 5,5-18 Gewichtsteile eines Phenolharzes pro 100 Teile Harzmischung;
g) 1,5-2,5 Gewichtsteile eines Benetzungsmittels pro 100 Teile Harzmischung.

4. Harzformulierung nach einem der Ansprüche 1 bis 3, enthaltend:
a) 100 Gewichtsteile einer Harzmischung, die ungesättigtes Polyesterharz und Antikontraktionszusatz enthält, wobei die Harzmischung 80-100 Gewichtsteile eines ungesättigten Polyesterharzes und 20-0 Gewichtsteile eines Antikontraktionszusatzes enthält;
b) 1,1-1,8 Gewichtsteile eines Katalysators pro 100 Teile Harzmischung,
c) 3-5 Gewichtsteile eines Verdickungsmittels pro 100 Teile Harzmischung;
d) 50-70 Gewichtsteile eines ersten Füllstoffs mit einer durchschnittlichen Teilchengröße von mehr als 5 bis 7 µm pro 100 Teile Harzmischung;
e) 20-30 Gewichtsteile eines zweiten Füllstoffs mit einer durchschnittlichen Teilchengröße von 2 bis 5 µm pro 100 Teile Harzmischung;
f) 10-14 Gewichtsteile eines Phenolharzes pro 100 Teile Harzmischung;
g) 1,5-2,5 Gewichtsteile eines Benetzungsmittels pro 100 Teile Harzmischung.

5. Harzformulierung nach einem der Ansprüche 1 bis 4, enthaltend:
a) 100 Gewichtsteile einer Harzmischung, die ungesättigtes Polyesterharz und Antikontraktionszusatz enthält, wobei die Harzmischung 100 Gewichtsteile eines ungesättigten Polyesterharzes und 0 Gewichtsteile eines Antikontraktionszusatzes enthält;
b) 1,1-1,8 Gewichtsteile eines Katalysators pro 100 Teile Harzmischung,
c) 3-5 Gewichtsteile eines Verdickungsmittels pro 100 Teile Harzmischung;
d) 59 Gewichtsteile eines ersten Füllstoffs mit einer durchschnittlichen Teilchengröße von mehr als 5 bis 7 µm pro 100 Teile Harzmischung;
e) 26 Gewichtsteile eines zweiten Füllstoffs mit einer durchschnittlichen Teilchengröße von 2 bis 5 µm pro 100 Teile Harzmischung;
f) 11 Gewichtsteile eines Phenolharzes pro 100 Teile Harzmischung;
g) 1,5-2,5 Gewichtsteile eines Benetzungsmittels pro 100 Teile Harzmischung.

6. Harzformulierung nach einem der Ansprüche 1 bis 5, wobei das Phenolharz mindestens ein Phenolharz, ausgewählt aus Novolaken, Resolen und Mischungen davon, und mindestens ein Härtungsmittel enthält.

7. Sheet Molding Compound (SMC), enthaltend: (i) eine Faserverstärkung und (ii) eine Harzformulierung nach einem der vorhergehenden Ansprüche als Matrix, die mit der Faserverstärkung zusammengebracht wird und sich zwischen Trägerfolien befindet.

8. Geformtes SMC-Teil oder ein Teil, das durch Formen des SMC aus dem vorhergehendem Anspruch 7 erhalten wird.

9. Geformtes SMC-Teil oder ein Teil, das durch Formen des SMC nach Anspruch 8 erhalten wird, wobei das Formen durch Formpressen ausgeführt wird.

10. Hybridmaterial, umfassend mindestens zwei Komponenten, die durch chemische Bindungen miteinander verbunden sind: eine erste Komponente, bestehend aus dem geformten SMC-Teil nach Ansprüchen 8 oder 9, und eine zweite Komponente, bestehend aus einem vulkanisierten EPDM-Kautschuk.

11. Hybridmaterial nach Anspruch 10, wobei der EPDM-Kautschuk ein Ethylen-Propylen-Dien Typ M ASTM-Standard D-1418 ist, der zwischen 65 Gew.-% und 75 Gew.-% Ethylen und einen ENB-Gehalt zwischen 4,5 und 5,5 % aufweist.

12. Prozess zur Herstellung des Sheet Molding Compound (SMC) nach Anspruch 7, umfassend:
- Kontinuierliches Liefern einer Harzformulierung nach einem der Ansprüche 1 bis 6;
- Zuführen einer ersten Trägerfolie und kontinuierliches Auftragen der Harzformulierung auf eine Oberfläche der Folie;
- Kontinuierliches Liefern von Faserverstärkung, vorzugsweise geschnittenen Fasern, und besonders bevorzugt geschnittenen Glasfasern, zu der ersten Trägerfolie mit der aufgebrachten Harzformulierung auf der Seite, die die Harzformulierung umfasst;
- Zuführen einer zweiten Trägerfolie und kontinuierliches Auftragen der Harzformulierung auf eine Oberfläche der Folie;
- Kontinuierliches Laminieren der zweiten Trägerfolie, die die Harzformulierung umfasst, mit der ersten Trägerfolie, so dass die Harzformulierungen jeder Folie in Kontakt sind und die Faserverstärkung sich zwischen den beiden Trägerfolien befindet und mit der Harzformulierung imprägniert wird;
- Verdichten des im vorherigen Schritt erhaltenen laminierten Zwischenprodukts, um das SMC herzustellen.

13. Prozess zur Gewinnung eines geformten SMC-Teils oder zum Formen von SMC, welcher umfasst, zwei oder mehr, im allgemeinen mehrere SMC-Folien nach Anspruch 7, als Schichten übereinander in einer Form zu platzieren und sie einer Kompression zu unterziehen.

14. Prozess zur Herstellung eines Hybridmaterials nach Anspruch 10 oder 11, wobei die erste Komponente durch den Prozess zur Gewinnung eines geformten SMC nach Anspruch 13 und die zweite Komponente durch Überspritzen einer EPDM-Kautschukpaste auf die erste Komponente erhalten wird.

15. Teile oder Elemente, die aus dem Hybridmaterial nach Anspruch 10 oder 11 hergestellt sind oder dieses enthalten.

## Revendications

1. Formulation de résine comprenant :
a) 100 parties en poids d'un mélange de résine comprenant :
(i) une résine de polyester insaturée et
(ii) un additif anticontraction,
lequel mélange de résine comprend 60 à 100 parties en poids d'une résine de polyester insaturée et 40 à 0 d'un additif anticontraction ;
b) 1,1 à 1,8 partie en poids d'un catalyseur pour 100 parties de mélange de résine ;
c) 3 à 5 parties en poids d'un agent épaississant pour 100 parties de mélange de résine ;
d) 40 à 90 parties en poids d'une première charge ayant une taille de particule moyenne de plus de 5 à 7 µm pour 100 parties de mélange de résine ;
e) 15 à 35 parties en poids d'une deuxième charge ayant une taille de particule moyenne de 2 à 5 µm pour 100 parties de mélange de résine ;
f) 5,5 à 22,5 parties en poids d'une résine phénolique pour 100 parties de mélange de résine ;
g) 1,5 à 2,5 parties en poids d'un agent mouillant pour 100 parties de mélange de résine.

2. Formulation de résine selon la revendication 1 comprenant :
a) 100 parties en poids d'un mélange de résine comprenant une résine de polyester insaturée et un additif anticontraction,
lequel mélange de résine comprend 80 à 100 parties en poids d'une résine de polyester insaturée et 20 à 0 partie d'un additif anticontraction ;
b) 1,1 à 1,8 partie en poids d'un catalyseur pour 100 parties de mélange de résine ;
c) 3 à 5 parties en poids d'un agent épaississant pour 100 parties de mélange de résine ;
d) 44 à 80 parties en poids d'une première charge ayant une taille de particule moyenne de plus de 5 à 7 µm pour 100 parties de mélange de résine ;
e) 19 à 35 parties en poids d'une deuxième charge ayant une taille de particule moyenne de 2 à 5 µm pour 100 parties de mélange de résine ;
f) 5,5 à 17 parties en poids d'une résine phénolique pour 100 parties de mélange de résine ;
g) 1,5 à 2,5 parties en poids d'un agent mouillant pour 100 parties de mélange de résine.

3. Formulation de résine selon la revendication 1 ou 2 comprenant :
a) 100 parties en poids d'un mélange de résine comprenant une résine de polyester insaturée et un additif anticontraction,
lequel mélange de résine comprend 80 à 100 parties en poids d'une résine de polyester insaturée et 20 à 0 partie en poids d'un additif anticontraction ;
b) 1,1 à 1,8 partie en poids d'un catalyseur pour 100 parties de mélange de résine ;
c) 3 à 5 parties en poids d'un agent épaississant pour 100 parties de mélange de résine ;
d) 50 à 70 parties en poids d'une première charge ayant une taille de particule moyenne de plus de 5 à 7 µm pour 100 parties de mélange de résine ;
e) 20 à 30 parties en poids d'une deuxième charge ayant une taille de particule moyenne de 2 à 5 µm pour 100 parties de mélange de résine ;
f) 5,5 à 18 parties en poids d'une résine phénolique pour 100 parties de mélange de résine ;
g) 1,5 à 2,5 parties en poids d'un agent mouillant pour 100 parties de mélange de résine.

4. Formulation de résine selon l'une quelconque des revendications 1 à 3 comprenant :
a) 100 parties en poids d'un mélange de résine comprenant une résine de polyester insaturée et un additif anticontraction,
lequel mélange de résine comprend 80 à 100 parties en poids d'une résine de polyester insaturée et 20 à 0 partie en poids d'un additif anticontraction ;
b) 1,1 à 1,8 partie en poids d'un catalyseur pour 100 parties de mélange de résine ;
c) 3 à 5 parties en poids d'un agent épaississant pour 100 parties de mélange de résine ;
d) 50 à 70 parties en poids d'une première charge ayant une taille de particule moyenne de plus de 5 à 7 µm pour 100 parties de mélange de résine ;
e) 20 à 30 parties en poids d'une deuxième charge ayant une taille de particule moyenne de 2 à 5 µm pour 100 parties de mélange de résine ;
f) 10 à 14 parties en poids d'une résine phénolique pour 100 parties de mélange de résine ;
g) 1,5 à 2,5 parties en poids d'un agent mouillant pour 100 parties de mélange de résine.

5. Formulation de résine selon l'une quelconque des revendications 1 à 4 comprenant :
a) 100 parties en poids d'un mélange de résine comprenant une résine de polyester insaturée et un additif anticontraction,
lequel mélange de résine comprend 100 parties en poids d'une résine de polyester insaturée et 0 partie en poids d'un additif anticontraction ;
b) 1,1 à 1,8 partie en poids d'un catalyseur pour 100 parties de mélange de résine ;
c) 3 à 5 parties en poids d'un agent épaississant pour 100 parties de mélange de résine ;
d) 59 parties en poids d'une première charge ayant une taille de particule moyenne de plus de 5 à 7 µm pour 100 parties de mélange de résine ;
e) 26 parties en poids d'une deuxième charge ayant une taille de particule moyenne de 2 à 5 µm pour 100 parties de mélange de résine ;
f) 11 parties en poids d'une résine phénolique pour 100 parties de mélange de résine ;
g) 1,5 à 2,5 parties en poids d'un agent mouillant pour 100 parties de mélange de résine.

6. Formulation de résine selon l'une quelconque des revendications 1 à 5, dans laquelle la résine phénolique comprend au moins une résine phénolique, sélectionnée parmi les novolaques, les résols et les mélanges de ceux-ci, et au moins un agent de durcissement.

7. Mélange à mouler en feuille (SMC) comprenant : (i) un renfort de fibre et (ii) une formulation de résine selon l'une quelconque des revendications précédentes en tant que matrice assemblée avec le renfort de fibre, et situé entre des films supports.

8. Partie en SMC moulée ou partie obtenue par moulage du SMC selon la revendication 7 précédente.

9. Partie en SMC moulée ou partie obtenue par moulage du SMC selon la revendication 8, dans laquelle le moulage est réalisé par moulage par compression.

10. Matériau hybride comprenant au moins deux composants reliés l'un à l'autre par des liaisons chimiques : un premier composant consistant en la partie en SMC moulée selon la revendication 8 ou 9, et un deuxième composant consistant en un caoutchouc EPDM vulcanisé.

11. Matériau hybride selon la revendication 10, dans lequel le caoutchouc EPDM est un éthylène propylène diène de type M norme ASTM D-1418 comprenant entre 65 % et 75 % en poids d'éthylène, et une teneur en ENB entre 4,5 et 5,5 %.

12. Procédé de préparation du mélange à mouler en feuille (SMC) selon la revendication 7, comprenant :
- la fourniture continue d'une formulation de résine selon l'une quelconque des revendications 1 à 6 ;
- l'alimentation d'un premier film support et l'application continue de ladite formulation de résine sur une surface du film ;
- la fourniture continue de renfort de fibre, préférentiellement de fibres coupées, et plus préférentiellement de fibres de verre coupées audit premier film support avec la formulation de résine appliquée sur le côté comprenant ladite formulation de résine ;
- l'alimentation d'un deuxième film support et l'application continue de ladite formulation de résine sur une surface du film ;
- le laminage continue du deuxième film support comprenant ladite formulation de résine avec le premier film support de telle sorte que lesdites formulations de résine de chaque film soient mises en contact, et que le renfort de fibre soit situé entre les deux films supports et imprégné avec ladite formulation de résine ;
- le compactage du produit laminé intermédiaire obtenu dans l'étape précédente pour rendre le SMC.

13. Procédé d'obtention d'une partie en SMC moulée ou de moulage de SMC, qui comprend la disposition de deux ou plus, en général de plusieurs feuilles de SMC telles que définies dans la revendication 7, les unes au-dessus des autres, en tant que couches, dans un moule et la soumission de celles-ci à une compression.

14. Procédé de fabrication d'un matériau hybride selon la revendication 10 ou 11, dans lequel le premier composant est obtenu par le procédé d'obtention d'un SMC moulé selon la revendication 13 et le deuxième composant est obtenu par sur-injection d'une pâte de caoutchouc EPDM sur le premier composant.

15. Parties ou éléments faits à partir du ou comprenant le matériau hybride selon la revendication 10 ou 11.
